# EUROPEAN PATENT APPLICATION

(11) **EP 1 502 785 A1**
(43) Date of publication of application: **02.02.2005**
(21) Application number: 04380163.8
(22) Date of filing: 30.07.2004
(51) Int. Cl.: B60H 1/32, B60H 1/00, B60P 3/36, F24F 5/00

(54) **Camping car or caravan with evaporative cooler**

(30) Priority: 01.08.2003 ES 200301866 U
(71) Applicant: Dirna, S.A., 28806 Alcala de Henares (Madrid) (ES)
(72) Inventor: Perez Mediavilla, Rafael, 28806 Alcala de Henares (Madrid) (ES)
(74) Representative: Maldonado Jordan, Julia

(57) **Abstract**

A camper trailer (1) comprising an evaporative air conditioner (3) provided with a water tank (7), wherein said water tank is located inside the trailer.

## Description

### OBJECT OF THE INVENTION

The present invention refers to a trailer incorporating an evaporative air conditioner provided with an internal water tank.

### BACKGROUND OF THE INVENTION

So-called evaporative air conditioners are air conditioning systems specifically applicable in vehicles such as automobiles, formed by a first unit situated on the roof of an interior, the interior air of which must be conditioned, connected, by a piping system for the passage of water and an electric cable system for electricity transmission, to a second unit usually located separately and at a lower height than the first unit. The second unit comprises a water tank and a pump which allows for conducting the water to the first unit, which in turn comprises a porous filter dampened by the water and an air propeller allowing to introduce outdoor air which has passed through the porous filter into the interior. Due to the evaporation and saturation of the circulating air, it is thus possible to particularly achieve the decrease of the temperature of the air introduced in the interior, and the regulation of the room temperature inside of it.

When the space which the evaporative air conditioner tries to cool is the interior of a trailer, the water tank of the second unit can be connected to the water tank with which the trailer itself is provided, in order to supply water to the interior thereof. It is thus possible to maintain the evaporative air conditioner operating at full capacity even in the event that the water tank thereof has been substantially emptied of water due to any reason.

The water tank of the evaporative air conditioners of trailers has traditionally been located in the exterior of the vehicle. The reason for this is in part the obviously easier filling, cleaning and positioning and replacement of said tank if it is secured to the external bodywork of the trailer, but also because of the belief that the installation thereof inside the trailer would not be feasible.

However, the installation of the water tank of the evaporative air conditioner of a trailer in the exterior thereof has numerous drawbacks. Firstly, it exposes the water tank to the inclemencies of the weather, which shortens its useful life. Secondly, its securing to the bodywork of the vehicle is difficult, and it is not possible to completely prevent the risk of detachment. And, finally, the external water tank is always exposed to acts of vandalism.

Therefore there is a need for an internal water tank of an evaporative air conditioner for trailers which solves the previous drawbacks.

### DESCRIPTION OF THE INVENTION

The invention consists of a trailer comprising an evaporative air conditioner provided with a water tank located inside the trailer, for example in any of the cases of the internal furniture of the trailer.

In one embodiment, the trailer has said water tank of the evaporative air conditioner connected to the water tank of the trailer itself.

In another aspect, the trailer has said water tank of the evaporative air conditioner secured with a tension member, optionally placed in a recess of the tank.

Yet in another aspect, the trailer has a water pump inside the water tank of the evaporative air conditioner, and, additionally or alternatively, a water pump external thereto.

In this specification (including the description and the claims), when the term "trailer" is used, it is done so in a broad sense, including trailers separated from the vehicle moving them and motorized camping cars, in which the interior for its occupants is inseparably attached to the automotive vehicle enabling its movement.

The invention allows solving the drawbacks derived from the wear and destruction of the water tank of the evaporative air conditioner as a consequence of the inclemencies of the weather, of an inadequate securing to the bodywork of the vehicle or of acts of vandalism. A practically appreciable advantage for the use of the trailer is achieved, which can have a much more secure air conditioner installation than those of the state of the art.

### DESCRIPTION OF THE DRAWINGS

The detailed description of the invention, which will be made below, will be better understood with the aid of the attached drawings in which, with an illustrative and nonlimiting character, the following has been shown:
Figure 1 shows a schematic view of a trailer with an evaporative conditioner provided with an internal water tank of the invention.
Figure 2 shows a perspective view of a water tank for its use in a trailer of the invention.

### DETAILED DESCRIPTION OF AN EMBODIMENT MODE

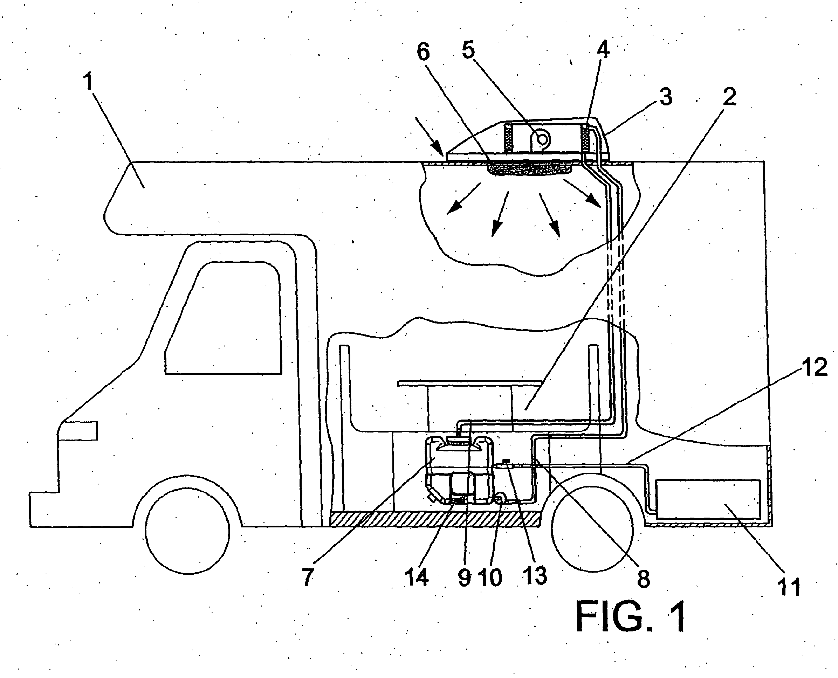

Figure 1 shows a schematic view of a trailer with an evaporative air conditioner provided with an internal water tank of the invention.

The trailer 1 has an interior 2 in which the occupants can rest and lead domestic life. This interior 2 is air-conditioned by means of an evaporative air conditioner comprising a unit 3 (in which there is a porous filter 4 and an air blower or propeller 5, which sends the duly cool air taken from outside to the inside of the interior 2. The arrows indicate the direction of the air taken from outside and driven inside. A control box 6 situated in the interior 2 allows for the regulation of the unit 3.

A water tank 7, connected by delivery pipes 8 and drainpipes 9, supplies water to the unit 3 to cool the air entering in the interior 2 and to humidify the latter. The water is driven by a water pump 10.

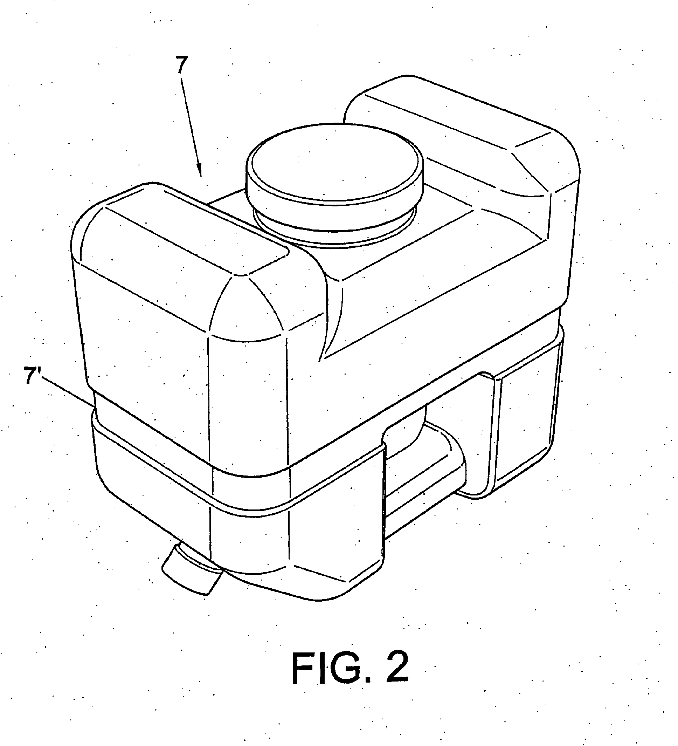

In the trailer 1 of the invention, the water tank 7 is situated inside the trailer 1. It can advantageously be situated in the case of any of the furniture elements existing in the interior 2 (for example, under the occupant seats of said interior 2, around the table usually existing in trailers, or, as is seen in Figure 1, in the large chest which is frequently situated in the interior 2, opposite to said table). Also advantageously, the water tank 7 is maintained secured in its position by means of a tension member (known in the state of the art and not specifically shown) and it can be provided with a suitable recess 7', which can specifically be seen in Figure 2, for better fixing thereof.

Up to now, it was believed to be physically impossible to place a water tank 2 for an evaporative air conditioner inside a trailer 1, but the inventor has shown that this is not true: there is enough space for the installation, particularly using the space of the cases of the furniture inside the interior 2, and providing that there is a water tank 7 adapted to said space and with sufficient conditions for suitable securing, as that seen in Figure 2.

The water tank 7 can advantageously be connected to the water tank 11 of the trailer 1 (the tank providing water for restrooms, kitchen sinks or even a shower), such that the water tank 7 ensures an additional water supply in the event that the water existing in the former decreases for any reason. The connection can be by means of any suitable conduit such as a pipe 12, and can be provided with flow control means, such as a faucet 13. The manner of carrying out the connection (making the pipe 12 pass under the panels of the trailer, preferably covering them with suitable chutes) is generally the same as that of the connection of the delivery pipes 8 and drainpipes 9, it will be obvious for the persons skilled in the art in question, and it is not considered necessary to describe it more specifically here.

Furthermore, other accessories could be installed, such as at least one level sensor 14, which allows for knowing at any time the water level existing in the water tank 7.

Persons skilled in the art will understand that modifications can be introduced in the embodiment mode described, without thereby changing the essence of the invention. Thus, for example, there could be more than one water pump 10, which can be inside the water tank 7 or not. Likewise, the conduits between the described elements of the evaporative air conditioner (including the pipe 12) could be more in number than those shown. Therefore, to determine the scope of the invention, the attached claims must be taken into account more than the preceding description.

## Claims

1. A trailer (1) comprising an evaporative air conditioner provided with a water tank (7), **characterized in that** said water tank (7) is located inside the trailer (1).

2. A trailer (1) according to claim 1, furthermore **characterized in that** said water tank (7) of the evaporative air conditioner is located in any of the cases of the interior furniture of the trailer (1).

3. A trailer (1) according to claim 1 or 2, furthermore **characterized in that** said water tank (7) of the evaporative air conditioner is connected to the water tank (10) of the trailer (1) itself.

4. A trailer (1) according to any of the previous claims, furthermore **characterized in that** said water tank (7) of the evaporative air conditioner is secured with a tension member.

5. A trailer (1) according to claim 4, furthermore **characterized in that** said water tank (7) of the evaporative air conditioner is provided with a recess (7') for placing the tension member.

6. A trailer (1) according to any of the previous claims, furthermore **characterized by** a water pump (10) inside said water tank (7) of the evaporative air conditioner.

7. A trailer (1) according to any of the previous claims, furthermore **characterized by** a water pump (10) outside said water tank (7) of the evaporative air conditioner.
